(19) Europäisches Patentamt
European Patent Office
Office européen des brevets

(11) **EP 2 701 120 A2**

(12) **EUROPEAN PATENT APPLICATION**

(43) Date of publication:
**26.02.2014 Bulletin 2014/09**

(51) Int Cl.:
***G06T 5/50*** (2006.01)

(21) Application number: **13180352.0**

(22) Date of filing: **14.08.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.08.2012 DE 102012016865**

(71) Applicant: **Connaught Electronics Ltd.**
**Tuam, County Galway (IE)**

(72) Inventor: **Denny, Patrick Eoghan**
**Roscam, County Galway (IE)**

(74) Representative: **Jauregui Urbahn, Kristian**
**Valeo Schalter und Sensoren GmbH**
**CDA-IP**
**Laiernstraße 12**
**74321 Bietigheim-Bissingen (DE)**

(54) **Improved alpha blending of images of a camera system of a motor vehicle**

(57)     The invention relates to a method for operating a camera system (2) of a motor vehicle (1), in which at least two cameras (3 to 6) each capture images (B1 to B6) of an environmental region (7 to 10) of the motor vehicle (1) and respective fields of view (12 to 15) of the cameras (3 to 6) overlap each other in pairs in certain areas, comprising the steps of:
- capturing an image (B1 to B6) by means of the at least two cameras (3 to 6), respectively,
- generating an overall image (GB) from the images (B1 to B6) by means of an electronic computing device (11) of the camera system (2), wherein the images (B1 to B6) overlap each other in an overlap area (23 to 26, 30) in the overall image (GB),
- and wherein the alpha blending method is applied to the two images (B1 to B6) in the overlap area (23 to 26, 30) by determining an alpha matrix (27) with alpha values ($\alpha$) for pixels of the overlap area (23 to 26, 30), which define transparency values for the one image (B1 to B6) and/or opacity values for the other image (B1 to B6).

Respective brightness values of the images (B1 to B6) at least in the overlap area (23 to 26, 30) are determined, and the alpha matrix (27) is determined depending on the brightness values.

Fig.3

EP 2 701 120 A2

**Description**

The invention relates to a method for operating a camera system of a motor vehicle, in which at least two cameras each capture images of an environmental region of the motor vehicle and respective fields of view of the cameras overlap each other in pairs in certain areas. By means of the at least two cameras, an image is respectively captured, and an overall image is generated from the images by means of an electronic computing device of the camera system, in which the images overlap each other in an overlap area. In the overlap area, the alpha blending method is applied to the two images by determining an alpha matrix with alpha values for pixels of the overlap area, which define transparency values for the one image and opacity values for the other image. In addition, the invention relates to a camera system as well as to a motor vehicle with a camera system.

Camera systems for motor vehicles are already prior art. As is known, in a motor vehicle, a plurality of cameras can be employed, wherein it becomes increasingly usual nowadays to use a camera assembly with at least two cameras for a driver assistance system of a vehicle, which each capture an environmental region of the motor vehicle. Even a plurality of cameras can be employed, which capture the entire environment around the motor vehicle. On a display device - for instance an LCD display - an image of the environment can then be displayed. For example, a region of the environment behind the motor vehicle (so-called "rear view") or else a region of the environment in front of the motor vehicle ("front view") can be presented on the display device. In addition, it is known to generate a plan view presentation from the images of all of the cameras, which shows a plan view of the motor vehicle as well as its environment from a bird's eye view. Such a plan view presentation can then also be displayed on the display. Such an approach is for example known from the document US 2011/0156887.

The invention is based on a camera system as it is for example described in the printed matter EP 2 012 271 A2. In this camera system, several cameras are disposed on the motor vehicle, which overall capture the environment around the motor vehicle. Therein, the respective fields of view of the cameras overlap each other in pairs. An overall image is generated from the images of the cameras, in which the images of different cameras overlap each other in an overlap area. A balance of the brightness values of object areas occurs.

For generating an overall image from at least two images overlapping each other in an overlap area of the overall image, it is already known to use the so-called alpha blending (alpha mixing). In the alpha blending, two images with an overlapping partial area are superimposed to an overall image, wherein the transparency of the pixels of one of the two images increases with increasing approach to the boundary of the field of view and thus to the boundary of the overlap area. If complete transparency or light transmittance of the pixel exists, thus, an alpha value of zero is present in the alpha blending. Correspondingly, an alpha value of $\alpha = 1$ signifies complete light resistance, thus, opacity of this pixel is present. Therefore, a pixel of the second image disposed behind the opaque pixel of the first image is no longer perceptible.

It is an object of the invention to demonstrate a solution how a method of the initially mentioned kind can be improved compared to the prior art.

According to the invention, the invention is solved by a method, by a camera system as well as by a motor vehicle having the features according to the respective independent claims. Advantageous implementations of the invention are the subject matter of the dependent claims, of the description and of the figures.

Accordingly, in the method according to the invention, it is proposed to determine respective brightness values of the images at least in the overlap area and to define the alpha matrix depending on the brightness values.

In the method according to the invention, thus, the brightness of the respective image is determined, and depending on the degrees of brightness of the two images, then, the distribution of the alpha values and thus the distribution of the transparency of the pixels in the overlap area are determined. Thus, for example, that image, which is brighter than the other image, can have more effect and thus have largely less transparency in the overlap area. Thus, an overall image - for example for the presentation on a display of the motor vehicle - can be generated, in which the overlap area between the two images overall has a good brightness and thus can be particularly well perceived by the driver. For example, this proves particularly advantageous if the motor vehicle is moved from a darker environment to a brighter environment, thus, for example it is moved in darkness into a bright garage or else it is moved in daylight out of the dark garage. A further advantage of the method according to the invention is in that a desired transition from the brighter image to the darker image can be allowed by correspondingly adjusting the alpha values $\alpha$ for the pixels of the overlap area.

The overall image generated from the images of the at least two cameras can for example be presented on a display device in the interior of the motor vehicle. Preferably, the overall image can be a plan view presentation, thus the so-called "bird eye view", thus an image showing the motor vehicle and its environment from a bird's eye view.

The at least two cameras are preferably video cameras each being capable of capturing a plurality of frames per second. These images are then processed by means of the computing device, and a video is generated in real time from these images by the computing device, which represents a temporal sequence of overall images, which are each generated from synchronously captured frames of the at least two cameras.

According to the alpha blending, the overlap area of the overall image is preferably calculated based on the following formula:

$$UB(x,y) = \alpha(x,y) \cdot B1(x,y) + \left[1 - \alpha(x,y)\right] \cdot B2(x,y),$$

wherein x, y denote the coordinates of a pixel of the overlap area, UB(x,y) denotes a pixel of the overlap area for the coordinates x and y, $\alpha(x,y)$ denotes an alpha value from the alpha matrix for the coordinates x and y, B1(x,y) denotes a pixel of the one image in the coordinates x and y, as well as B2(x,y) denotes a pixel of the other image in the coordinates x and y.

With the mentioned formula for generating the overlap area, only the alpha matrix with alpha values has to be defined for all of the pixels of the overlap area, such that the overlap area can be generated without much computational effort altogether. While an alpha value $\alpha$ defines a transparency value for the associated pixel of the first image, this alpha value $\alpha$ at the same time also constitutes an opacity value of the associated pixel of the second image. If the transparency of the first image is increased, thus, the opacity of the second image at the same time also increases at the same pixel. This is clearly recognizable based on the above formula with the factors $\alpha(x,y)$ as well as [1- $\alpha(x,y)$].

Particularly preferably, the alpha values in the alpha matrix are determined such that the transparency of the first image in the overlap area is increased from a first boundary of the overlap area delimiting the overlap area from the remaining area of the first image, towards a second boundary delimiting the overlap area from the remaining area of the second image. At the same time, the opacity of the second image is also increased from the first boundary to the second boundary. Therein, it proves particularly advantageous if the position of a center line defining the transparency of 50 % of the two images, is determined depending on the brightness values of the two images. This means that depending on the brightness values of the two images, it is determined how fast the alpha values are to change from the first boundary towards the second boundary of the overlap area. In other words, depending on the brightness values, it is determined how fast the transparency of the first image and thus the opacity of the second image are changed from the first boundary towards the second boundary. This change can for example be a linear change. It can also be a steady and accordingly a continuous change. Overall, this embodiment has the advantage that it can be determined without much effort, which one of the two images has more effect than the other image in the overlap area, depending on the brightness values.

Herein, it can in particular be provided that the mentioned 50 % center line is closer to the second boundary of the overlap area if the first image has a higher degree of brightness than the second image. Correspondingly, it is provided that if the second image has a higher brightness value than the first image, the center line is closer to the first boundary region of the overlap area. Thus, that image has more effect in the overlap area and has a lower transparency in the predominant overlap area, which has a higher brightness than the other image.

It can also occur that the brightness values of the two images are the same or else approximately the same such that the two images are approximately equally bright. If the computing device identifies such a case and determines that a difference between the respective brightness values is lower than a predetermined limit value, the alpha matrix can be determined depending on the steepness of a respective gamma curve, by means of which the respective image is subjected to gamma correction. Thus, the two images can be subjected to gamma correction in known manner, for which a so-called gamma curve is defined, respectively. If the brightness values of the two images are approximately the same, thus, this gamma curve can now be used for determining the alpha matrix and in particular for determining the position of the 50 % center line. In particular, here, it can be provided that in the overlap area that image has largely a greater opacity and has more effect, the gamma curve of which is less steep in the initial range - thus in the dark range - than the gamma curve of the other image. In particular, it can therefore be provided that the 50 % center line is then closer to the second boundary of the overlap area if the gamma curve of the second image is steeper in the initial range than the gamma curve of the first image in the same range. And vice versa, if the gamma curve of the first image is steeper than that of the second image, the 50 % center line can be defined such that it is closer to the first boundary of the overlap area. By considering the gamma curve in the determination of the alpha matrix, it is achieved that in the overlap area that image becomes more visible, in which overall a lower amplification of the noise by the gamma correction results. Thus, additional amplification of the noise in the overlap area is avoided.

As the brightness value of the respective images, preferably, the respective average of the brightness of the images at least in the overlap area can be determined. This means that both an average of the brightness of the first image at least in the overlap area and the average of the brightness of the second image in the overlap area are determined in order to then be compared to each other.

It can also be provided that for determining the brightness values, the gain factors of the cameras are determined and the alpha matrix is determined depending on these gain factors. This embodiment exploits the fact that the gain factor of a camera is always adjusted depending on the brightness of the environment. In a brighter environment, a lower gain factor is adjusted, while in a dark environment, a greater gain factor has to be adjusted. Instead of determining the actual brightness values in expensive manner, in simple manner, the respective gain factor of the cameras can for example be read out from a memory and virtually used as a brightness value or a value correlated with the brightness value. Thus, the effort in determining the brightness values is minimal.

As already explained above, the brightness values of the two images can be used for determining the alpha matrix. Besides the brightness values, however, further parameters can also affect the determination of the alpha matrix for the overlap area:

For example, the level of the respective camera above the ground can also be taken into account in defining the alpha matrix. This embodiment is based on the realization that the quality of the images is also influenced by the level, on which the camera is attached to the motor vehicle. Namely, the relation applies that the lower the camera is disposed on the motor vehicle, the less usable the images of this camera are for generating the overall image. Now, this can be considered to the effect that the images of such a camera, which is attached to the motor vehicle relatively low, have less effect in the overlap area than the images of the other camera.

It also proves advantageous if additionally the current direction of travel of the motor vehicle is taken into account in determining the alpha matrix and in particular in determining the position of the 50 % center line. Therein, the following approach can be advantageous: If the current direction of travel of the motor vehicle corresponds to the capturing direction of one of the cameras, thus, the image of this camera can be more visible in the overlap area than the image of the other camera, and thus have less transparency than the other image in the larger area. Thus, the overlap area can be more or mainly dominated by the image of that camera, the capturing direction of which coincides with the direction of travel of the motor vehicle. This can be performed by corresponding determination of the position of the 50 % center line in the overlap area. In this embodiment, that image has more effect in the overlap area, in which the environmental region of the motor vehicle relevant to the driver is imaged.

A further approach is in determining the respective temperature of the cameras, namely in particular of the respective image sensor, and determining the alpha matrix, in particular the position of the center line, depending on the temperatures of the cameras. In particular, therein, it is provided that in the overlap area, the image of that camera becomes more intense, which has a lower temperature. If the temperature of the first camera is lower than the temperature of the second camera, thus, the position of the center line can be determined such that this line is closer to the second boundary of the overlap area. However, if the temperature of the first camera is higher than that of the second camera, thus, the 50 % center line can be closer to the first boundary of the overlap area. The noise portion in the overlap area is therefore reduced.

The position of the 50 % center line can also be determined depending on whether or not one of the cameras is partially damaged or the image sensor operates erroneously. For example, if the second camera is damaged, thus, the center line can be closer to the second boundary.

Above, a plurality of parameters and aspects was mentioned, respectively, which can affect the position of the 50 % center line in the overlap area. Therein, the alpha values of the alpha matrix can be generated by weighting these parameters. This for example means that respective weighting factors can be associated with both the temperature and the brightness value such that the position of the center line is defined both depending on the brightness values and depending on the temperatures according to the weighting factors.

In an embodiment, it is provided that the size of the overlap area is changed depending on a difference between the degrees of brightness of the two images. If the difference of the two brightness values is relatively high, thus, a larger overlap area can likewise be defined than with a smaller difference. This has the advantage that the computational effort in the overlap area can be reduced with approximately the same brightness values by reducing the size of the overlap area.

Preferably, at least two mentioned alpha matrices are provided, namely a current matrix used at the current time of generation of the overlap area of the overall image from the two images, as well as at least one substitute matrix processed and therefore prepared for a later employment independently of the overlap area - thus without influence on the current overlap area. While the current matrix is therefore actively used at the current time in order to calculate the overlap area and thus to generate the overall image, the substitute matrix is not used at the current time, but only processed "in the background" and correspondingly adapted to the varying parameters. This embodiment has the advantage that the display on the display does not have to be continuously changed and the driver therefore is not disturbed by permanent change of the display. In addition, the provision of an additional matrix also has the advantage that the effort in data processing upon generation of the overlap area is reduced because new alpha values do not have to be continuously taken into account.

The current matrix - namely at least a region of the current matrix - can be replaced with the substitute matrix prepared in the background if a predetermined criterion is satisfied. This criterion can include the condition that:

- change of the vehicle speed since the last exchange of the current matrix exceeds a preset limit value, and/or
- an operating mode of the camera system, in particular a presentation mode of a display of the camera system, has been changed since the last exchange of the matrix, and/or
- change of the steering angle of the motor vehicle since the last exchange of the matrix exceeds a predetermined limit value, and/or
- the exchange is requested by a superordinate controller, and/or
- a predetermined time has elapsed since the last exchange of the matrix.

Therein, it has proved advantageous if the current matrix is replaced with the substitute matrix if the following logic is overall satisfied:

- if the change of the vehicle speed since the last exchange of the matrix exceeds the preset limit value OR
- if the operating mode of the camera system has been changed since the last exchange of the matrix OR
- if the change of the steering angle since the last exchange of the matrix exceeds the associated predetermined limit value OR
- if the exchange is requested by a superordinate controller for example due to an important current representation of the camera, AND
- a predetermined time has elapsed since the last exchange of the matrix.

Thus, the current matrix is preferably replaced with the substitute matrix for generating the overlap area if at least one of the first four conditions and additionally also the last condition are satisfied. Thus, the alpha matrix is updated if it is really required. By the last mentioned condition, according to which the predetermined period of time has to be elapsed, it is achieved that the driver is not too often disturbed by continuous change of the presentation on the display.

The computing device can for example examine in predetermined time intervals whether or not the above mentioned requirements are satisfied. Such examination can for example be performed every 100 ms or every 200 ms or else in time intervals of 300 ms or 400 ms or 500 ms.

The invention also relates to a camera system for a motor vehicle, which is formed for performing a method according to the invention.

A motor vehicle according to the invention includes a camera system according to the invention.

The preferred embodiments presented with respect to the method according to the invention and the advantages thereof correspondingly apply to the camera system according to the invention as well as to the motor vehicle according to the invention. Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings. It is emphasized that the embodiment described below represents a preferred embodiment of the invention and the invention thus is not restricted to this exemplary embodiment.

There show:

Fig. 1    in schematic illustration a motor vehicle with a camera system according to an embodiment of the invention;

Fig. 2    a block diagram of a camera system according to an embodiment of the invention;

Fig. 3    in schematic illustration two images of different cameras, which are processed to an overall image with an overlap area, wherein the first image is brighter than the second image;

Fig. 4    two images of different cameras, which are processed to an overall image with an overlap area, wherein the first image is darker than the second image.

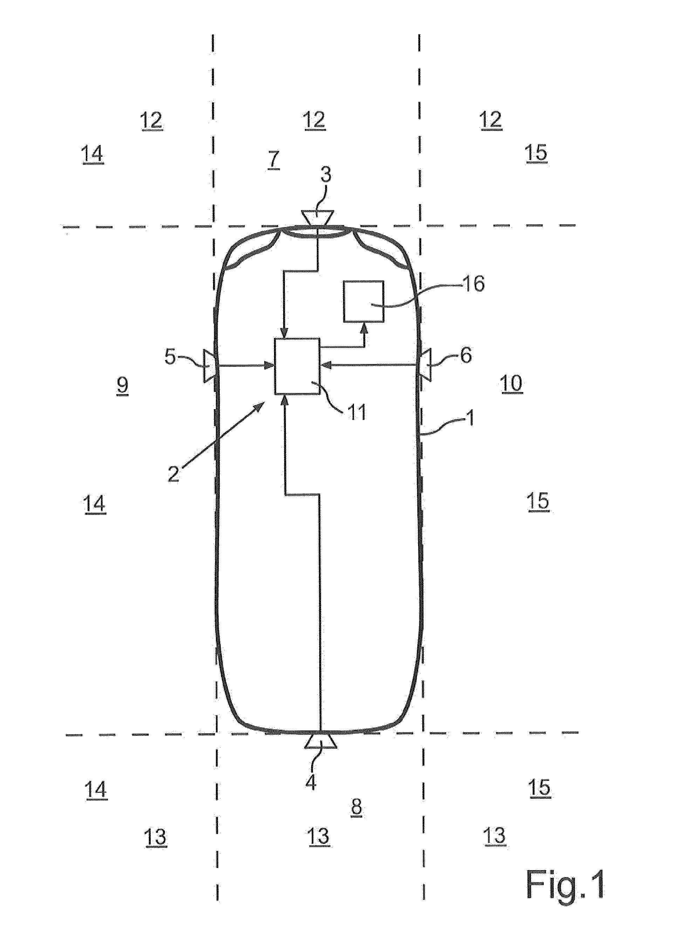

A motor vehicle 1 illustrated in Fig. 1 is for example a passenger car. The motor vehicle 1 has a camera system 2 with for example four cameras 3, 4, 5, 6, which are disposed distributed on the motor vehicle 1 such that the cameras 3, 4, 5, 6 overall capture the environment around the motor vehicle 1. Thus, the entire environment of the motor vehicle 1 and therefore a 360° image is captured. The camera 3 is disposed in the front region of the motor vehicle 1, for example behind the windscreen. The camera 3 therefore captures an environmental region 7 in front of the motor vehicle 1. The second camera 4 is mounted in the rear region of the motor vehicle 1, for example on a tailgate or else behind the rear window. Thus, it captures an environmental region 8 behind the motor vehicle 1. The lateral cameras 5, 6 can for example be incorporated in the respective exterior mirrors. Therein, the third camera 5 captures the environmental region 9 to the left of the motor vehicle 1, while the fourth camera 6 captures an environmental region 10 on the right side of the motor vehicle 1.

The number as well as the arrangement of the cameras 3, 4, 5, 6 are only exemplarily illustrated in Fig. 1 and can vary according to embodiment.

The cameras 3, 4, 5, 6 have a relatively wide aperture angle, which can for example be in a range of values from 160° to 200°, For example, the cameras 3, 4, 5, 6 can be so-called fish-eye cameras.

The cameras 3, 4, 5, 6 are video cameras, which each can capture a plurality of frames per second. The images are then communicated to a central computing device 11, which processes the images of all of the cameras 3, 4, 5, 6. The capture of the images by all of the cameras 3, 4, 5, 6 is effected in time-synchronous manner.

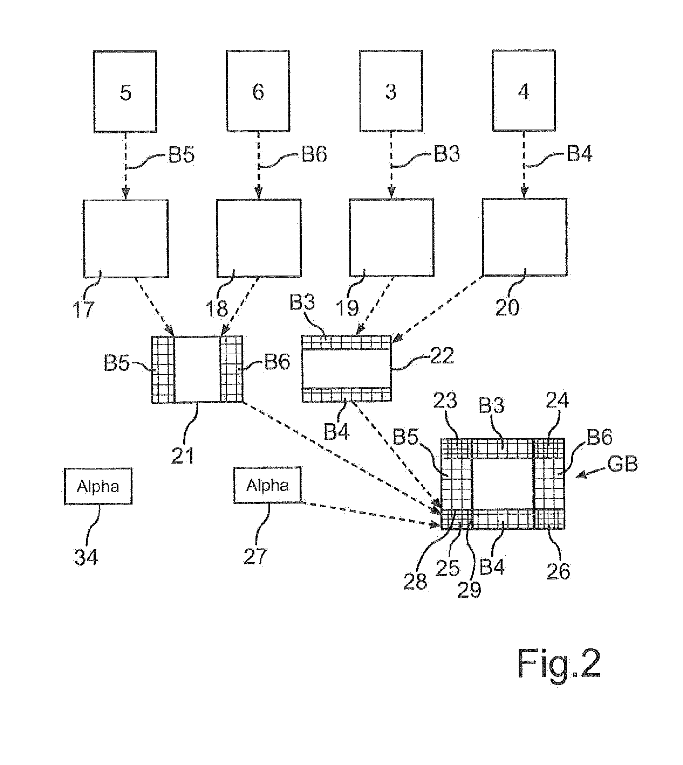

Thus, the camera 3 captures the environmental region 7 in front of the motor vehicle 1. Therefore, the camera 3 has a capturing range or a field of view 12, which covers the environmental region 7 in front of the motor vehicle 1. Correspondingly, the second camera 4 also has a field of view 13, which covers the environmental region 8 behind the motor vehicle 1. Corresponding fields of view of the cameras 5, 6 are designated by 14 and 15 in Fig. 1. As is apparent from Fig. 2, the fields of view of the cameras 3, 4, 5, 6 overlap each other in pairs and in certain areas. Namely, the fields of view 12 and 14 of the cameras 3, 5, the fields of view 12, 15 of the cameras 3, 6 as well as the fields of view 13, 14 of the cameras 4, 5 as well as the fields of view 13, 15 of the cameras 4, 6 overlap each other.

As already explained, the computing device 11 receives the images of all of the cameras 3, 4, 5, 6 and can process these images. For example, the computing device 11 calculates an overall image from the videos of all of the cameras 3, 4, 5, 6 in real time, which shows a plan view of the motor vehicle 1 and its environment 7, 8, 9, 10 from a bird's eye view. With respect to the frames of the cameras 3, 4, 5, 6, the computing device 11 generates an overall image from these frames of all of the cameras 3, 4, 5, 6, which shows such a plan view. If such overall images are calculated from the entire sequences of frames of the cameras 3, 4, 5, 6, thus, a temporal sequence of overall images, thus an overall video, results. These overall images can then be presented on a display 16 in the motor vehicle 1 in real time.

In Fig. 2, a block diagram of the camera system 2 is illustrated. As already explained, the cameras 3, 4, 5, 6 provide respective images B3, B4, B5, B6, from which the overall image GB is generated. Although only frames B3, B4, B5, B6 are mentioned below, it is understood that the cameras 3, 4, 5, 6 each provide an entire video and thus a temporal sequence of images. For simplicity, however, the following description is related to frames of the cameras 3, 4, 5, 6.

The images B5 of the camera 5 are stored in a storage 17, namely in a so-called "buffer". Correspondingly, the images B6 of the camera 6 are also stored in a storage 18, while the images B3 and B4 are also stored in respective storages 19, 20. In a subsequent block 21, the images B5 and B6 of the cameras 5, 6 are combined. Parallel thereto, the images B3 and B4 of the cameras 3, 4 are also combined in a further block 22. From these combined images, then, the overall image GB is generated, in which the images B3, B4, B5, B6 overlap each other in pairs in certain areas. Namely, the overall image GB has four overlap areas 23 to 26 in total: The images B3, B5 overlap each other in the overlap area 23; the images B3 and B6 overlap each other in the overlap area 24; the images B5 and B4 overlap each other in the overlap area 25; the images B4 and B6 overlap each other in the overlap area 26.

It can also be provided that at least one of the overlap areas 23 to 26 is completely filled with the image of a single camera 3, 4, 5, 6, such that overlap does not exist. In the present embodiment, however, it is preferably provided that each overlap area 23 to 26 is generated from two images. The following description relates to the overlap area 25, but correspondingly also applies to all of the other overlap areas 23, 24, 26.

In order to generate the overlap area 25 (see Fig. 2), besides the images B5 and B4, an alpha matrix 27 is also used. The alpha blending is applied to the two images B4, B5 using the following equation:

$$UB(x,y) = \alpha(x,y) \cdot B4(x,y) + \left[1 - \alpha(x,y)\right] \cdot B5(x,y).$$

Therein denote:

- UB(x,y) a pixel of the overlap area 25 for the coordinates x and y,
- $\alpha$(x,y) an alpha value of the alpha matrix for the coordinates x and y,
- B4(x,y) a pixel of the image B4 for the coordinates x and y,
- B5(x,y) a pixel of the image B5 for the coordinates x and y.

Thus, the alpha matrix 27 has as many matrix coefficients as there are pixels in the overlap area 25. However, alternatively it can also be provided that the number of the coefficients of the matrix 27 is less than the number of the pixels and one coefficient is used for multiple pixels.

The matrix coefficients of the alpha matrix 27 are defined such that the transparency of the image B5 in the overlap area 25 increases from a first boundary 28 of the overlap area 25 towards a second boundary 29 of the overlap area 25. Therein, the first boundary 28 delimits the overlap area 25 from the remaining area of the image B5, while the second boundary 29 delimits the overlap area 25 from the remaining area of the image B4. This increase of the transparency of the image B5 towards the boundary 29 is effected by corresponding increase of the alpha values $\alpha$ in the

above equation. At the same time, thereby, the opacity of the pixels of the image B4 also increases towards the second boundary 29. This change of the alpha values α from the first boundary 28 towards the second boundary 29 can for example be a linear change, e.g. according to a predetermined linear function. However, alternatively, a non-linear function can also be defined for the change of the alpha values.

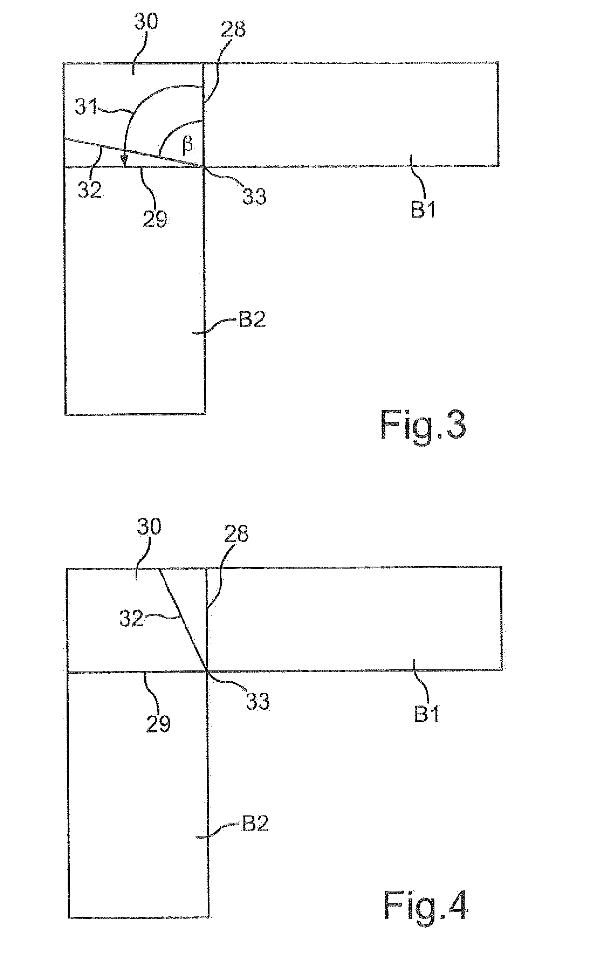

The generation of an overlap area 30 from two images B1 and B2 of different cameras is now explained in more detail with reference to Fig. 3 and 4: This general description can apply to all of the overlap areas 23 to 26 and accordingly to the images B3, B4, B5, B6 of the cameras 3, 4, 5, 6. As already explained, the overlap area 30 has a first boundary 28 as well as a second boundary 29, which extends perpendicularly to the first boundary 28. Generalization of the above equation for the images B1 and B2 is:

$$UB(x,y) = \alpha(x,y) \cdot B1(x,y) + \left[1 - \alpha(x,y)\right] \cdot B2(x,y).$$

The alpha values α of the alpha matrix 27 are reduced from the first boundary 28 towards the second boundary 29 according to the arrow representation 31. As already explained, this can be performed according to a linear function. In the overlap area 30, a center line 32 is defined, along which all of the alpha values α are equal to 0.5. This means that both the image B1 and the image B2 have a transparency of 50 % and thus an opacity of 50 % at the center line 32. This center line 32 can now be defined in various positions in the overlap area 30, wherein this center line 32 always begins at an inner intersection 33 of the images B1, B2. Preferably, the center line 32 is a straight line.

In other words, the position of the center line 32 in the overlap area 30 can be defined by an angle β between this center line 32 and the first boundary 28.

For determining the position of the center line 32 in the overlap area 30 and thus for determining the angle β, now, the following parameters are taken into account, which optionally are correspondingly weighted.

Mainly, for determining the position of the center line 32, the brightness of the two images B1, B2 is taken into account. Namely, averages of the brightness of the images B1, B2 are determined and compared to each other. For determining these brightness values, the corresponding gain factors of the cameras 3, 4, 5, 6, can be used, which are adjusted depending on the brightness of the imaged environment. These gain factors can for example be read out from a memory.

In the embodiment according to Fig. 3, the image B1 is brighter than the image B2. For this reason, the center line 32 is closer to the second boundary 29, and the angle β is greater than 45°. Generally speaking, it can apply: If the first image B1 is brighter than the second image B2, the angle β is greater than 45°. However, if the second image B2 is brighter than the first image B1, thus, the center line 32 is closer to the first boundary 28.

Now, in Fig. 4, a situation is illustrated, in which the image B2 is brighter than the image B1. As is apparent from Fig. 4, the center line 32 now is closer to the first boundary 28. Thus, in the predominant overlap area 30, the image B2 is less transparent than the image B1. Only in a small partial area of the overlap area 30, the transparency of the image B2 is larger than that of the image B1.

For determining the position of the center line 32, further parameters can also be used, which can be correspondingly weighted. For example, the following parameters are taken into account:

- the level of the respective camera above the ground, thus the level, on which the camera is attached to the motor vehicle; and/or
- the direction of travel of the motor vehicle - if the motor vehicle for example travels in capturing direction of that camera, which captures the first image B1, the center line 32 can be shifted towards the second boundary 29; and/or
- the respective temperature of the cameras - if the temperature of the camera capturing the first image B1 is higher than the temperature of the other camera, thus, the center line 32 can be shifted towards the first boundary 28; and/or
- information about damage of one of the cameras.

It can also occur that the brightness values of the images B1 and B2 are approximately identical. If this is determined by the computing device 11, thus, in determining the position of the center line 32, the steepness of the respective gamma curve can also be taken into account, by which the two images B1, B2 are corrected. If the gamma curve of the first image B1 is less steep in the initial region of this curve than that of the second image B2, thus, the center line 32 is defined closer to the second boundary 29. Thus, additional amplification of the noise is prevented.

Again with reference to Fig. 2, besides the alpha matrix 27, at least one further alpha matrix 34 can be defined. The alpha matrix 27 is used as the current matrix at the respectively current time in order to generate the overlap area 25 of the overall image GB. This current matrix 27 then is not changed anymore. The alpha matrix 34 constitutes a substitute matrix, which is processed "in the background" depending on the above mentioned parameters and prepared for later replacement of the matrix 27. The current matrix 27 is replaced with the substitute matrix 34 (at least in certain areas) if the following conditions are satisfied:

- if the change of the vehicle speed since the last exchange of the matrix exceeds the preset limit value OR
- if the operating mode of the camera system has been changed since the last exchange of the matrix OR
- if the change of the steering angle since the last exchange of the matrix exceeds the associated predetermined limit value OR
- if the exchange is requested by a superordinate controller for example due to an important current representation of the camera, AND
- a predetermined time has elapsed since the last exchange of the matrix.

If this logic is satisfied, thus, the current matrix 27 is replaced with the substitute matrix 34, and the matrix 27 becomes a substitute matrix, while the matrix 34 becomes a current matrix.

In an embodiment, the processing and preparation of the substitute matrix 34 in the background can be effected continuously and consecutively. This means that the substitute matrix 34 is consecutively adapted to the continually varying parameters. However, alternatively, for reducing the computational effort, it can also be provided that the substitute matrix 34 is only processed and adapted to the new parameters if the above conditions are satisfied and thus the current matrix 27 is to be replaced.

**Claims**

1. Method for operating a camera system (2) of a motor vehicle (1), in which at least two cameras (3 to 6) each capture images (B1 to B6) of an environmental region (7 to 10) of the motor vehicle (1) and respective fields of view (12 to 15) of the cameras (3 to 6) overlap each other in pairs in certain areas, comprising the steps of:

   - capturing an image (B1 to B6) by means of each of the at least two cameras (3 to 6),
   - generating an overall image (GB) from the images (B1 to B6) by means of an electronic computing device (11) of the camera system (2), wherein the images (B1 to B6) overlap each other in an overlap area (23 to 26, 30) in the overall image (GB),
   - and wherein the alpha blending method is applied to the two images (B1 to B6) in the overlap area (23 to 26, 30) by determining an alpha matrix (27) with alpha values ($\alpha$) for pixels of the overlap area (23 to 26, 30), which define transparency values for the one image (B1 to B6) and/or opacity values for the other image (B1 to B6),
   **characterized in that**
   respective brightness values of the images (B1 to B6) are determined at least in the overlap area (23 to 26, 30) and the alpha matrix (27) is determined depending on the brightness values.

2. Method according to claim 1,
   **characterized in that**
   the overlap area (23 to 26, 30) of the overall image (GB) is calculated based on the following function:

$$UB(x,y) = \alpha(x,y) \cdot B1(x,y) + [1 - \alpha(x,y)] \cdot B2(x,y),$$

   wherein x, y denote the coordinates of a pixel of the overlap area, UB(x,y) denotes a pixel of the overlap area for the coordinates x and y, $\alpha$(x,y) denotes an alpha value from the alpha matrix (27) for the coordinates x and y, B1 (x,y) denotes a pixel of an image in the coordinates x and y and B2(x,y) denotes a pixel of the other image in the coordinates x and y.

3. Method according to claim 1 or 2,
   **characterized in that**
   according to the alpha matrix (27), the transparency of a first one of the images (B1 to B6) in the overlap area (23 to 26, 30) is increased from a first boundary (28) of the overlap area (23 to 26, 30) delimiting the overlap area (23 to 26, 30) from the remaining area of the first image (B1 to B6) towards a second boundary (29) delimiting the overlap area (23 to 26, 30) from the remaining area of the second image (B1 to B6), and at the same time the opacity of the second image (B1 to B6) is increased, wherein the position of a center line (32), along which the transparency of the two images (B1 to B6) is each 50 %, is determined depending on the brightness values of the two images (B1 to B6).

4. Method according to claim 3,
   **characterized in that**

   - if the first image (B1 to B6) has a higher brightness value than the second image (B1 to B6), the center line (32) is closer to the second boundary (29) of the overlap area (23 to 26, 30), and
   - if the second image (B1 to B6) has a higher brightness value than the first image (B1 to B6), the center line (32) is closer to the first boundary (28) of the overlap area (23 to 26, 30).

5. Method according to any one of the preceding claims,
   **characterized in that**
   if it is determined by the computing device (11), that a difference between the respective brightness values is smaller than a predetermined limit value, the alpha matrix (27) is determined depending on the steepness of a respective gamma curve, by means of which the respective image (B1 to B6) is subjected to gamma correction.

6. Method according to any one of the preceding claims,
   **characterized in that**
   as the brightness value, the respective average of the brightness of the images (B1 to B6) is determined at least in the overlap area (23 to 26, 30).

7. Method according to any one of the preceding claims,
   **characterized in that**
   the determination of the brightness values of the images (B1 to B6) includes that respective gain factors of the cameras (3 to 6) are determined and the alpha matrix (27) is determined depending on the gain factors.

8. Method according to any ane of the preceding claims,
   **characterized in that**
   in determining the alpha matrix (27), the current direction of travel of the motor vehicle (1) is additionally taken into account.

9. Method according to any one of the preceding claims,
   **characterized in that**
   the respective temperature of the at least two cameras (3 to 6), in particular of a respective image sensor, is determined and the alpha matrix (27) is determined depending on the temperatures of the cameras (3 to 6).

10. Method according to any one of the preceding claims,
    **characterized in that**
    the size of the overlap area (23 to 26, 30) is changed depending on a difference between the respective brightness values.

11. Method according to any one of the preceding claims,
    **characterized in that**
    at least two alpha matrices (27, 34) are provided, of which one alpha matrix (27) is used as a current matrix at the current time for generating the overlap area (23 to 26, 30) of the overall image (GB) and at least one alpha matrix (34) is processed independently of the overlap area (23 to 26, 30) as a substitute matrix for later employment.

12. Method according to claim 11,
    **characterized in that**
    the current matrix (27) is replaced with the substitute matrix (34) for generating the overlap area (23 to 26, 30) if:

    - change of the vehicle speed since the last exchange of the current matrix exceeds a preset limit value, and/or
    - an operating mode of the camera system (2), in particular a presentation mode of a display of the camera system (2), has been changed since the last exchange of the matrix, and/or
    - change of the steering angle of the motor vehicle (1) since the last exchange of the matrix exceeds a predetermined limit value, and/or
    - the exchange is requested by a superordinate controller, and/or
    - a predetermined time has elapsed since the last exchange of the matrix.

13. Camera system (2) for a motor vehicle (1), including at least a first and a second camera (3 to 6) each for capturing images of an environmental region (7 to 10) of the motor vehicle (1), wherein respective fields of view (12 to 15) of the cameras (3 to 6) overlap each other in certain areas, and including an electronic computing device (11) adapted to generate an overall image (GB) from an image (B1 to B6) of the first camera (3 to 6) and an image (B1 to B6) of the second camera (3 to 6), in which the two images (B1 to B6) overlap each other in an overlap area (23 to 26, 30), and wherein the computing device (11) is adapted to apply the alpha blending method to the two images (B1 to B6) in the overlap area (23 to 26, 30) and herein to determine an alpha matrix (27) with alpha values ($\alpha$) for pixels of the overlap area (23 to 26, 30), which define transparency values for the one image (B1 to B6) and/or opacity values for the other image (B1 to B6),

**characterized in that**

the computing device (11) is adapted to determine respective brightness values of the two images (B1 to B6) at least in the overlap area (23 to 26, 30) and to determine the alpha matrix (27) depending on the brightness values.

14. Motor vehicle (1) including a camera system (2) according to claim 13.

EP 2 701 120 A2

Fig.1

11

Fig.2

Fig.3

Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110156887 A

- EP 2012271 A2